# EUROPEAN PATENT SPECIFICATION

(11) **EP 3 562 313 B1**
(45) Date of publication and mention of the grant of the patent: **01.12.2021**
(21) Application number: 17835775.2
(22) Date of filing: 29.12.2017
(51) Int. Cl.: A23G 3/34, A23L 5/47

(54) **EDIBLE INK FORMULATIONS INCLUDING SCALENOHEDRAL CALCIUM CARBONATE PARTICLES**
SCALENOHEDRISCHE CALCIUMCARBONATPARTIKEL ENTHALTENDE ESSBARE TINTE
ENCRE COMESTIBLE CONTENANT DES PARTICULES DE TYPE SCALÉNOHÉDRAL DE CARBONATE DE CALCIUM

(30) Priority: 29.12.2016 US 201662440032 P
(43) Date of publication of application: 06.11.2019
(73) Proprietor: Mars, Incorporated, McLean, VA 22101 (US)
(72) Inventor: COLLINS, Thomas, M., Hackettstown NJ 07840 (US); STEFANY, David, W., Hackettstown NJ 07840 (US)
(74) Representative: Haseltine Lake Kempner LLP
(86) International application number: PCT/US2017/068894
(87) International publication number: WO 2018/126109

(56) References cited:
- EP-A1- 2 537 900
- WO-A1-2013/142473
- JP-A- 2010 235 764
- US-A1- 2007 014 913
- US-A1- 2011 280 942

## Description

### FIELD

The presently disclosed subject matter relates to novel edible ink formulations comprising calcium carbonate as a white pigment and alcohol-based solvents. The formulations of the present disclosure provide a desired whiteness and opacity, while successfully interfacing with machine printing. The present disclosure further relates to a food product having the edible ink formulation of the present disclosure applied to a surface thereof and in the form of a wet film or a dry film and to a method of printing an edible ink formulation onto a food product.

### BACKGROUND

Pigment grade titanium dioxide (TiO₂) is often used as a white pigment in a variety of applications, including paints, glazes, and colorants, and across a variety of industries including home goods, construction, paper products, consumer products, personal care products, and cosmetics. Titanium dioxide is also commonly used to provide a desirable white color and opacity to various food and confectionery products, including edible ink formulations.

However, there is confusion among some consumers between safety concerns associated with nanosize-grade titanium dioxide versus the thoroughly tested and safe pigment-grade titanium dioxide approved for food use. As such, there is a growing interest in replacing titanium dioxide with a different, natural white pigment to meet the consumer demand for food products made with natural ingredients. One possible substitute is rice starch. However, rice starch is unable to impart a "bright" white color, does not deliver sufficient opacity, and is used at much higher levels that can lead to issues with high viscosity as compared to titanium dioxide.

Thus, there is a need for improved edible white ink formulations that do not include titanium dioxide. The presently disclosed subject matter addresses these and other needs as discussed in detail below.

US 2011/280942 A1 describes a film coating composition comprising a cellulosic polymer, an opacifying agent, and a fatty acid or comprising a cellulosic polymer, an opacifying agent, a plasticizing agent, and a polyol which may be mixed with a solvent to produce a film coating suspension. According to US 2011/280942 A1, the film coating suspension can be applied to a substrate. Methods of coating a substrate with the film coating suspensions are also provided.

WO 2013/142473 A1 describes a process for preparing a precipitated calcium carbonate product which comprises the steps of preparing slaking quick lime to obtain slaked lime; and subjecting the slaked lime, without agitation, without prior cooling in a heat exchanger, and in the absence of any additives, to carbonation with carbon dioxide gas to produce PCC.

US 2007/014913 A1 describes a soymilk based frozen dessert and process of making the soymilk based frozen dessert. The soymilk based frozen dessert is a calcium fortified soymilk based frozen dessert that uses calcium carbonate as the calcium fortifier.

EP 2 537 900 A1 describes a process for the production of precipitated calcium carbonate which produces a precipitated calcium carbonate that can have other crystal habits than those produced by the known "inverse" carbonation processes.

### SUMMARY OF THE INVENTION

The present disclosure provides edible ink formulations comprising scalenohedral calcium carbonate particles. The calcium carbonate particles can be used as a white pigment, such that the edible ink formulation is an edible white ink formulation. The presently disclosed edible ink formulations can be used as a substitute for edible ink formulations comprising titanium dioxide.

In certain aspects, the present disclosure provides an edible ink formulation. The edible ink formulation comprises scalenohedral calcium carbonate particles, a solvent and a binder,
wherein the solvent is one or more C2 to C6 alcohols, selected from the group consisting of isopropanol, 1-propanol, ethanol, 1-butanol, 3-methyl-1-butanol, 2-butanol, hexanol and combinations thereof, and wherein the calcium carbonate particles are present in amount of from about 15 wt-% to about 35-wt%,
wherein the edible ink formulation, when prepared as a dry film, exhibits a reflectance of from about 30% to about 75% in a range of from about 440 nm to about 700 nm as measured as the dried film created from a wet film of thickness equal to 6 mil (152.4 µm) and a lightness L^{∗} value of at least about 40 as measured as the dried film created from wet films at a thickness of about 13 µm under CIE Standard Illuminant D65 when prepared as a dry film.

In certain embodiments, the edible ink formulation can have an applied wet film thickness of about 10 µm or less while maintaining these color properties. The calcium carbonate particles can be present in an amount of from about 20 wt-% to about 30 wt-%. In certain embodiments, the calcium carbonate particles can have a particle size of from about 0.5 µm to about 5 µm, or from about 1.5 µm to about 3 µm. The edible ink formulation can have a lightness L^{∗} value of at least about 70 as measured as the dried film created from a wet film at a thickness of about 28 µm, optionally, the edible ink formulation has an applied wet film thickness of about 28 µm or less. The edible ink formulation can have a reflectance of from about 60% to about 75% in the range of from about 440 nm to about 700 nm. In certain embodiments, the edible ink formulation can have an applied wet film thickness of about 28 µm or less, which corresponds to a reflectance of from about 40% to about 45%, while maintaining color properties consistent with the values presented here.

The edible ink formulation comprises a solvent and a binder. The solvent is one or more of C2 to C6 alcohols, selected from the group consisting of isopropanol, 1-propanol, ethanol, 1-butanol, 3-methyl-1-butanol (isoamyl alcohol), 2-butanol, hexanol and combinations thereof, optionally, the one or more C2 to C6 alcohols is selected from the group consisting of isopropanol, 1-propanol, ethanol, 1-butanol, 3-methyl-1-butanol (isoamyl alcohol), 2-butanol and hexanol. The binder can be shellac, Zein, polyvinylpyrrolidone, or certain alcohol-soluble cellulose-based polymers, such as hydroxypropylcellulose (HPC) or ethylcellulose.

In certain embodiments, the solvent is present in a range from about 40 wt.% to about 65 wt.% in the edible ink formulation.

In certain embodiments, the solvent is a non-water containing solvent consisting of isopropanol and isoamyl alcohol.

The present disclosure further provides food products having the edible ink formulation of the present disclosure applied to a surface thereof and in the form of a wet film or a dry film. For example, the food product can be a confectionery product. In certain embodiments, the confectionery product can be a hard-panned candy. The hard-panned candy can include a polish coating. Alternatively, the food product can be a snack food product.

The present disclosure further provides a method of printing an edible ink formulation onto a food product. The method comprises providing a surface of a food product, contacting an edible ink formulation comprising scalenohedral calcium carbonate particles with the surface of the food product, transferring the edible ink formulation to the surface of the food product, and drying the edible ink formulation, wherein the dried edible ink formulation exhibits a reflectance of from about 30% to about 75% in a range of from about 440 nm to about 700 nm as measured as the dried film created from a wet film of thickness equal to 6 mil (152.4 µm)and a lightness L^{∗} value of at least about 40 measured as the dried film created from wet films at a thickness of about 10 µm under CIE Standard Illuminant D65, wherein the edible ink formulation comprising scalenohedral calcium carbonate particles further comprises a solvent and a binder, wherein the solvent is one or more C2 to C6 alcohols, selected from the group consisting of isopropanol, 1-propanol, ethanol, 1-butanol, 3-methyl-1-butanol, 2-butanol, hexanol and combinations thereof, and wherein the calcium carbonate particles are present in amount of from about 15 wt-% to about 35-wt%.

In certain embodiments, the method can further include treating the surface of the food product prior to contacting the surface with the edible ink formulation. As embodied herein, the food product can be a confectionery product. In certain embodiments, the confectionery product can be a hard-panned candy optionally including a polish coating. Alternatively, the food product can be a snack food product.

### BRIEF DESCRIPTION OF THE DRAWINGS

**Figure 1** provides a graph comparing the amount of calcium carbonate (ranging from 20 wt-% to 30 wt-%) in an edible ink formulation and the viscosity of the edible ink formulation, as described in Example 1.
**Figures 2A-2F** provide photographs of calcium carbonate particles, where Figure 2A depicts scalenohedral particles, Figure 2B depicts cubic particles, Figure 2C depicts prismatic particles, Figure 2D depicts rosette particles, Figure 2E depicts precipitated irregular particles, and Figure 2F depicts ground irregular particles.

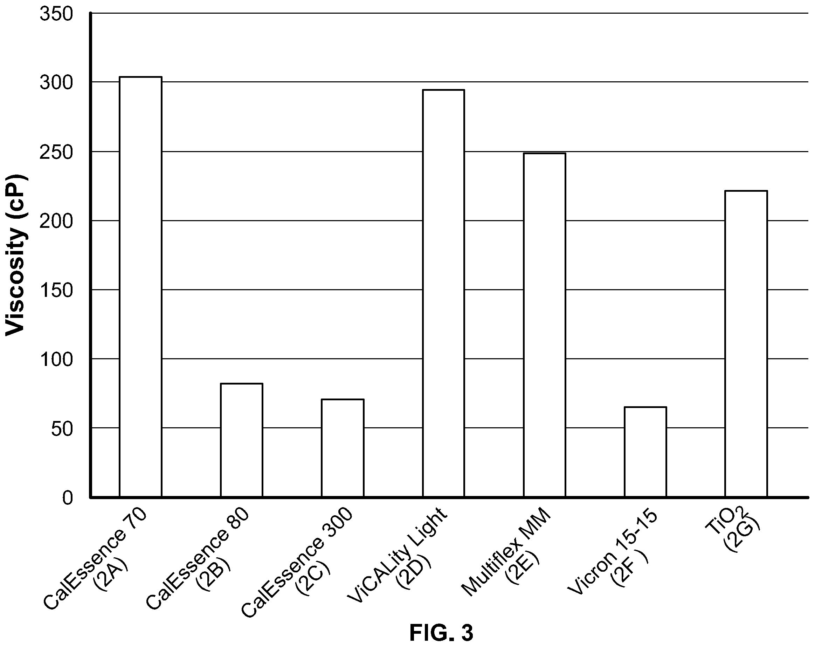

**Figure 3** provides a graph of the viscosities of Samples 2A-2G of Example 2.
**Figure 4** provides a graph of reflectance over the range of 360 nm to 740 nm of Samples 2A-2G of Example 2.
**Figure 5** provides a graph of lightness under CIE Standard Illuminant D65 for Samples 2A, 2D, and 2G of Example 2 as compared to applied wet film thickness.
**Figure 6** provides a graph of reflectance over the range of 360 nm to 740 nm of Sample 2D of Example 2.
**Figures 7A-7C** provide photographs of drawdowns of edible ink formulations, as described in Example 2. Figure 7A shows the drawdown of Sample 2G, Figure 7B shows the drawdown of Sample 2D, and Figure 7C shows the drawdown of Sample 2A.
**Figure 8** provides the printing rating system used to evaluate the resolution or sharpness of the printed images using the edible inks of the disclosed subject matter.
**Figures 9A-9C** provide photographs of pilot printed hard-panned candies, which have been printed with white edible ink formulations, where Figure 9A is a photograph of candies printed with Sample 2G, Figure 9B is a photograph of candies printed with Sample 2D, and Figure 9C is a photograph of candies printed with Sample 2A. In each of Figures 9A, 9B, and 9C, the top row comprises two yellow candies, and the middle and bottom rows comprise a red, blue and green candy (from left to right).
**Figure 10** provides a graph of lightness under CIE Standard Illuminant D65 for Samples 4A and 4B of Example 4 as compared to applied wet film thickness.

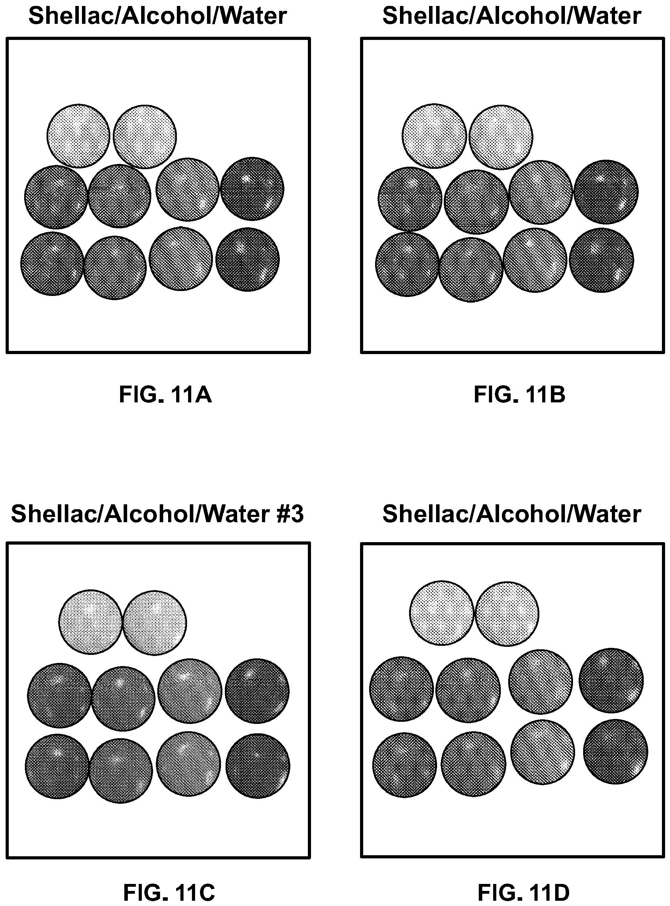

**Figures 11A-11D** provide photographs of hard-panned candies, which have been pilot-printed using water-containing, white edible ink formulations, as described in Example 3 and Table 5. Figure 11A is a photograph of candies printed with Sample #1 (shellac, alcohol and water), Figure 11B is a photograph of candies printed with Sample #2 (shellac, alcohol and water), Figure 11C is a photograph of candies printed with Sample # 3 (shellac, alcohol and water), and Figure 11D is a photograph of candies printed with Sample # 4 (shellac, alcohol and water). In each of Figures 11A, 11B, 11C, and 11D, the top row comprises two yellow candies, and the middle and bottom rows comprise a red, blue, green, and brown candy (from left to right).
**Figures 12A-12B** provide photographs of hard-panned candies, which have been pilot-printed using alcohol-based, white edible ink formulations, as described in Example 3 and Table 6. Figure 12A is a photograph of candies printed with Sample #1 (shellac, alcohol), Figure 12B is a photograph of candies printed with Sample #2 (shellac, alcohol). In each of Figures 12A and 12B, the top row comprises two yellow candies, and the middle and bottom rows comprise a red, blue, green, and brown candy (from left to right).
**Figures 13A-13B** provide photographs of hard-panned candies, which have been pilot-printed using alcohol-based, white edible ink formulations, as described in Example 3 and Table 7. Figure 13A is a photograph of candies printed with Sample #1 (ETHOCEL^{™}, alcohol), Figure 13B is a photograph of candies printed with Sample #2 (ETHOCEL^{™}, alcohol). In each of Figures 13A and 13B, the top row comprises two yellow candies, and the middle and bottom rows comprise a red, blue, green, and brown candy (from left to right).

### DETAILED DESCRIPTION

As noted above, to date, there remains a need in the art for an edible ink formulation that does not contain titanium dioxide, but which is able to provide desirable white color. The present disclosure provides such edible ink formulations, which include scalenohedral calcium carbonate particles as a white pigment. These edible ink formulations are food-safe and can be used to provide white color to a variety of food products, confectionery products, and snack food products.

### 1. Definitions

The terms used in this specification generally have their ordinary meanings in the art, within the context of this disclosed subject matter and in the specific context where each term is used. Certain terms are discussed below, or elsewhere in the specification, to provide additional guidance to the practitioner in describing the compositions and methods of the disclosed subject matter and how to make and use them.

As used herein, the use of the word "a" or "an" when used in conjunction with the term "comprising" in the claims and/or the specification can mean "one," but it is also consistent with the meaning of "one or more," "at least one," and "one or more than one." Still further, the terms "having," "including," "containing" and "comprising" are interchangeable and one of skill in the art is cognizant that these terms are open-ended terms.

The term "about" or "approximately" means within an acceptable error range for the particular value as determined by one of ordinary skill in the art, which will depend in part on how the value is measured or determined, *i.e.,* the limitations of the measurement system. For example, "about" can mean within 3 or more than 3 standard deviations, per the practice in the art. Alternatively, "about" can mean a range of up to 20%, preferably up to 10%, more preferably up to 5%, and more preferably still up to 1% of a given value.

As used herein, "food product" or "food product composition" includes ingestible products including but not limited to human foods, animal or pet foods, pharmaceutical products, and consumer products.

As used herein, the term "confectionery product" refers to a sweet or dessert food product. Confectionery products with surfaces suitable for the printing of an edible ink formulation can include, but are not limited to, candies (hard and soft), compressed mints, chewing gums, gelatins, chocolates, fudge, fondant, liquorice, taffy, and combinations thereof.

As used herein, the term "snack food product" refers to a sweet or savory food product, such as fruit snacks, chips/crisps, extruded snacks, tortilla/corn chips, popcorn, pretzels, nuts, granola/muesli bars, breakfast bars, energy bars, fruit bars, other snack bars, and combinations thereof.

The term "reflectance" as used herein with respect to a material is the percentage of any incident electromagnetic radiation that reflects back from a surface. Reflectance is a function of wavelength, and the reflectance of a material can vary across the electromagnetic spectrum. A material that is a perfect reflector at a particular wavelength has a reflectance of 100% at that wavelength.

The term "lightness" as used herein is the perceived whiteness of a particular material when measured under a standard illuminant, e.g., CIE Standard Illuminant D65, and is the lightness component of the material in the L^{∗}a^{∗}b^{∗} color space *(i.e.,* the Commission Internationale de l'Eclairage CIE L^{∗}a^{∗}b^{∗} values, established in 1976). Lightness as used herein can alternatively be termed "value," "tone," or "L^{∗}." As used herein, the maximum value for lightness is 100, corresponding to white, and the minimum value is zero, corresponding to black.

As used herein, "viscosity" refers to the dynamic or shear viscosity of a material, *e.g.,* a liquid edible ink formulation. Viscosity is indicative of the thickness of the material, or its resistance to flow. Viscosity can be expressed in terms of centipoise (cP). Viscosity can be measured using a viscometer, e.g., a Brookfield RVDV-II+ Viscometer equipped with a small sample adapter at an RPM of 100.

As used herein, the terms "applied wet film thickness" or "wet film thickness" refer to the thickness of an edible ink formulation when applied to the surface of a product on a drawdown card to be treated and prior to being dried.

As used herein, the term "weight percent" or "wt-%" is meant to refer to the quantity by weight of a component in a material (e.g., an edible ink formulation) as a percentage of the total wet weight of the material *(i.e.,* prior to being dried).

As used herein, the term "substantially scalenohedral shape" means that the calcium carbonate particles are not limited to any particular number of faces.

### 2. Edible Ink Formulations

The present application relates to edible ink formulations comprising scalenohedral calcium carbonate (CaCO₃) particles. The edible ink formulation can produce a white color when printed onto a surface. The edible ink formulation can have optical properties similar to those exhibited by formulations containing titanium dioxide in order to produce a white edible ink formulation that can be used in place of formulations containing titanium dioxide.

In certain embodiments, the edible ink formulation can have a certain reflectance in a portion of the electromagnetic spectrum. The edible ink formulation can reflect light within the range of the visible spectrum *(i.e.,* from about 390 nm to about 700 nm). For example, when prepared as a dried film, the edible ink formulation can reflect light across the range of about 440 nm to about 700 nm, and thereby reflect visible white light. The edible ink formulation has a reflectance of from about 30% to about 75% in the range of from about 440 nm to about 700 nm, for example from about 40% to about 75%, or from about 50% to about 75%, in the range of from about 440 nm to about 700 nm. Alternatively, the edible ink formulation can have a reflectance of from about 55% to about 75%, or from about 60% to about 75% in the range of from about 440 nm to about 700 nm.

In addition to reflectance, the edible ink formulation can also have a certain lightness, as measured under a reference standard illuminant, e.g., the CIE Standard Illuminant D65. D65 is a standard illuminant approximating the color of midday outdoor daylight in Northern and Western Europe. It can be used as a light source to test the color properties of materials as they would appear under midday outdoor daylight in this region. The use of a reference standard illuminant as a light source enables the color properties of materials to be accurately compared to each other. When prepared as a dried film and tested under D65 illumination, the edible ink formulation has a lightness L^{∗} value of at least about 40, for example at least about 50, at least about 60, at least about 65, at least about 70, at least about 75, or at least about 80.

The reflectance and lightness of the edible ink formulation can contribute to its appearance as a "bright" white when applied and dried on a surface. Higher values of reflectance and lightness of an edible ink formulation indicate that the edible ink formulation would be perceived as having a brighter white color. In certain embodiments, the edible ink formulation can produce a bright white with good contrast when placed on a darker background. As embodied herein, the edible ink formulation can also have a suitable opacity when dried to ensure no light transmission to the underlying surface, thereby ensuring that the surface beneath the dried edible ink formulation does not directly alter the perceived color of the ink formulation.

Additionally, the color profile of the edible ink formulation can be defined in terms of other components of the L^{∗}a^{∗}b^{∗} color space. For example, the edible ink formulation can preferably have a value of b^{∗} that is close to zero. For example, in certain embodiments, the edible ink formulation can have a b^{∗} value of from about +10 to about -10, or from about +5 to about -5, or from about +3 to about -3. For example, the edible ink formulation can have a value of a^{∗} that is from about -2.5 to about 0.

Although described in terms of edible white ink formulations, it should be understood that the edible ink formulation can be combined with other pigments or dyes to formulate other colors. For example, in certain embodiments, the edible ink formulation can be combined with a black or gray pigment to form a gray ink. Suitable black pigments include iron oxides. Alternatively, the edible ink formulation can be combined with one or more colored pigments or dyes, such as a red, orange, yellow, green, blue, or violet pigment or dye. Such pigments and dyes can be any artificial or non-artificial color, as known in the art.

As embodied herein, in addition to color properties, the edible ink formulation can have additional properties to facilitate the printing or application of the edible ink formulations to various surfaces. For example, the edible ink formulation can have a certain viscosity. The viscosity can be calibrated to be compatible with existing manufacturing equipment, e.g., printers. Additionally, or alternatively, the viscosity can be calibrated to be compatible with the surface. For example, a viscosity can be chosen such that the edible ink does not run or smudge when applied to a surface. For example, in certain embodiments, the viscosity of the edible ink formulation can range from about 150 cP to about 350 cP.

### 2.1 Calcium Carbonate

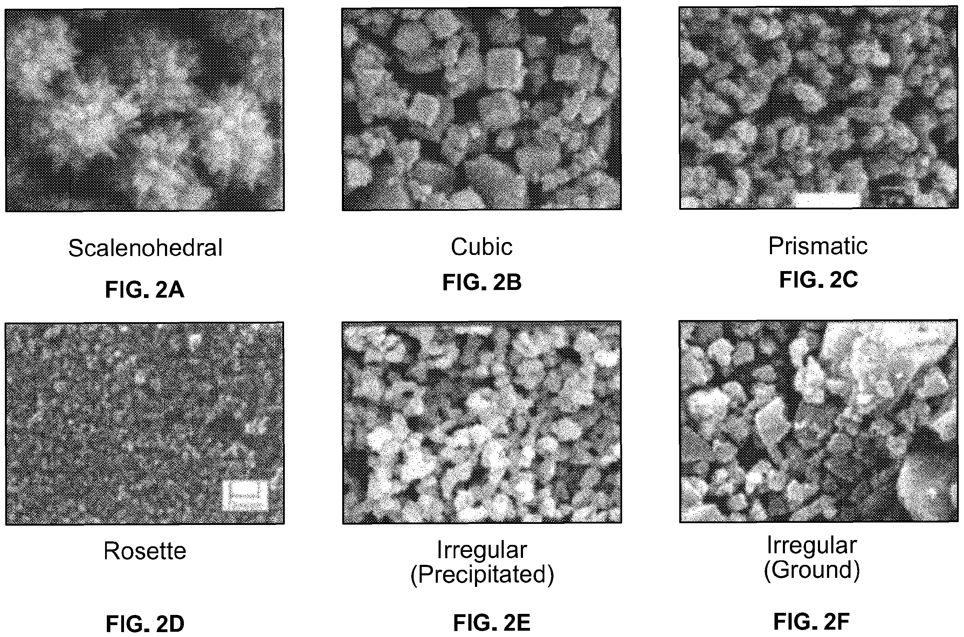

The presently disclosed edible ink formulations includes scalenohedral calcium carbonate particles. As used herein, "scalenohedral" refers to a particle shape, wherein approximately every face of the particle is a scalene triangle *(see* Figure 2A). The scalenohedral particles described herein are not limited to any particular number of faces, and need not be strictly scalenohedrons as long as the particles have a substantially scalenohedral shape.

Precipitated calcium carbonate ("PCC") exists in three primary crystalline forms: calcite, aragonite and vaterite, with calcite being the most stable polymorph of calcium carbonate. There are many different polymorphs (crystal habits) for each of these crystalline forms. Calcite has a trigonal structure with typical crystal habits such as scalenohedral (S-PCC), rhombohedral (R-PCC), hexagonal prismatic, pinacoidal, colloidal (C-PCC), cubic, or prismatic (P-PCC). Scalenohedral calcium carbonate has desirable light-scattering properties and is relatively inexpensive. For purpose of example, and not limitation, suitable scalenohedral particles are described in U.S. Patent Publication No. US2016/0023915. Further non-limiting examples of suitable scalenohedral particles include ViCALity particles (Minerals Technologies, Inc.), for example, ViCALity^{™} Light, ViCALity^{™} Extra Light, and ViCALity^{®} Medium Precipitated Calcium Carbonate particles.

As demonstrated herein, edible ink formulations including scalenohedral calcium carbonate particles were surprisingly found to have improved reflectance and lightness. Further, edible ink formulations including scalenohedral calcium carbonate particles were surprisingly found to achieve this improved lightness when applied in a thin ink layer, *e.g.,* at a wet film thickness of about 28 µm or less or about 10 µm or less. This wet thickness corresponds to the actual wet ink layer thickness on printed candy. As disclosed herein, the scalenohedral calcium carbonate particles were surprisingly able to be used as a pigment with color properties comparable to those of titanium dioxide particles. Additionally, scalenohedral calcium carbonate particles were surprisingly advantageous in an edible ink formulation having a suitable viscosity for printing, e.g., via a contact printing process. Each of these advantages will be described in greater detail below.

As embodied herein, the calcium carbonate particles can have a particle size ranging from about 0.5 µm to about 10 µm, or from about 0.5 µm to about 8 µm, or from about 0.5 µm to about 5 µm, or from about 0.5 µm to about 3 µm, or from about 1 µm to about 3 µm, or from about 1.5 µm to about 3 µm.

As described herein, calcium carbonate particles are present in the edible ink formulation in an amount of from about 15 wt-% to about 35-wt%. For example, in certain embodiments, an edible ink formulation can include less than about 30 wt-% calcium carbonate particles. In other embodiments, an edible ink formulation can include from about 20 wt-% to about 30 wt-%, or from about 25 wt-% to about 30 wt-% calcium carbonate particles.

The calcium carbonate particles can be prepared using any suitable method as known in the art. The preparation method can be chosen based on the desired shape and size of the calcium carbonate particles. For purpose of example, and not limitation, suitable methods of preparing scalenohedral particles are described in U.S. Patent Publication No. US2016/0023915.

### 2.2. Additional Components

In certain embodiments of the disclosed subject matter, the edible ink formulations can further include one or more additional components. For example, the edible ink formulations can include any suitable solvents and binders, as necessary to ensure suitable viscosity and compatibility with an underlying surface. As used herein, the term suitable viscosity means an ink viscosity that allows acceptable performance with the ink printing apparatus. As used herein, compatibility with the surface means an ink with wetting characteristics such that the application of the ink to the surface to be printed conforms to the intended design of the image.

As embodied herein, any additional materials included in the edible ink formulations should be compatible with the calcium carbonate pigment, so as to not detract from the white color provided by the calcium carbonate. Also, any additional materials should not detract from the performance of the ink in a transfer rotogravure printer and the effective transfer of the ink from one stage of the printer to the next, *i.e.,* from the engraved roll to the rubber roll to the candy surface. Additional components include, but are not limited to, colorants, preservatives, natural or artificial flavor compounds, plasticizers, dispersants, emulsifiers, fillers, micronutrients, etc.

### 2.2.1. Solvents

Solvents of the presently disclosed subject matter are alcohol-based and include at least one alcohol. In certain embodiments, the solvent can include one alcohol, two alcohols, three alcohols, four alcohols, or more. The solvent is one or more C2 to C6 alcohols selected from the group consisting of isopropanol, 1-propanol, ethanol, 1-butanol, 3-methyl-1-butanol (isoamyl alcohol), 2-butanol, hexanol and combinations thereof. In certain embodiments, the suitable solvent can further include diols, such as propylene glycol. In a specific embodiment of the disclosed subject matter, the solvent is a non-water-containing solvent consisting of isopropanol and isoamyl alcohol.

The suitable solvent may be present in a range of from about 30 wt-% to about 70 wt-%, or from about 40 wt-% to about 65 wt-%, or from about 50 wt-% to about 60 wt%.

As disclosed herein, the presently disclosed subject matter does not include water-based solvents. Specifically, the solvents of the presently disclosed subject matter do not contain water.

As demonstrated below, edible ink formulations including scalenohedral calcium carbonate particles and non-water-containing solvents were surprisingly found to have improved lightness and print quality compared to water-based formulations. As disclosed herein, the formulations of the disclosed subject matter surprisingly and successfully address the challenges of having a CaCO₃ ink transfer effectively through a printer such as a rotogravure printer. The all alcohol-based ink formulations are the first formulations shown to print effectively on a printer, whereas water-based or combinations of water and alcohol-based inks do not print well.

### 2.2.2. Binders

Edible ink formulations according to the disclosed subject matter can further contain one or more binders. A "binder" is understood to refer to an ingredient that forms a continuous matrix which binds the pigment particles together and to the surface being printed after all the solvent is removed and the image cured on the substrate.

In the presently disclosed subject matter, the binder is soluble in alcohol. Additionally, or alternatively, suitable binders include resins, such as shellac, povidone, and certain alcohol-soluble cellulose-based polymers, such as polyvinylpyrrolidone, hydroxypropylcellulose (HPC), ethylcellulose, and Zein. Zein is an edible coating and an alcohol-soluble protein present in corn (available, e.g., from Flo Chemical Corp. or Sigma Aldrich). Zein is used in the manufacture of plastics, paper coatings, adhesives, substitutes for shellac, laminated board, and solid color printing films.

In certain embodiments, shellac can be diluted with a suitable solvent, as defined above. In alternative embodiments, the binders for use in the edible inks according to the disclosed subject matter include shellac and/or ethylcellulose.

The composition of the presently disclosed subject matter contains a binder in a range of from about 2 wt-% to about 20 wt-%, or from about 3 wt-% to about 18 wt-% based on the edible ink composition. In certain embodiments, the binder is present in a range of from about 4 wt-% to about 16 wt-%, or from about 5 wt-% to about 14 wt-%, or from about 6 wt-% to about 12 wt-%, or from about 7 wt-% to about 12 wt-% based on the edible ink composition. In a particular embodiment, the binder is present in a range of from about 8 wt-% to about 12 wt-% based on the edible ink composition.

### 3. Food Products

The edible ink formulations of the presently disclosed subject matter can be applied to the surface of various food products, including confectionery products such as candies (hard and soft), compressed mints, chewing gums, gelatins, chocolates, fudge, fondant, liquorice, and taffy.

In particular embodiments, the edible ink formulation is applied to the surface of a hard-panned confectionery product. A hard-panned confectionery product can comprise a center core and at least one coating layer containing crystallized sugar. For example, and not by way of limitation, a hard-panned confectionery product can comprise a plurality of coating layers. For example, and not by way of limitation, the edible core can comprise chocolate. In certain embodiments, the surface of the hard-panned confectionery product can further comprise a polish coating that is applied prior to the edible ink formulation. As such, the edible ink formulation can be printed as a dry film on the polish coating.

The hard-panned confectionery product can be a dragee type confectionery product. Non-limiting examples of the type of cores in a dragee type confectionery product can include a natural center (e.g., almond, hazelnut or groundnut) or a "confectionery" center (e.g., caramel, fondant or chocolate). The cores can then be coated with chocolate, with successive layers of sugars or other substances such as polyols, gums and natural polymers, that can further include one or more color compositions of the present disclosure.

In certain embodiments, the methods for manufacturing hard-panned confectionery products can comprise the deposition of a plurality of sublayers, for example between about 5 and about 30, by a succession of phases of application and drying carried out, for example, in a pan. In a hard-panning process, multiple applications of a highly concentrated sugar syrup can be used to build up the uncolored portion of a sugar coating on an edible product center. This can be followed by multiple applications of a concentrated sugar syrup containing a colorant composition. In certain embodiments, the hard-panning process comprises the repetitive application of thin layers of a coating solution or composition onto an intermixed mass of centers, and the drying of each layer of coating solution or composition during which the sugar in the coating crystallizes between the applications of layers. Additional non-limiting examples of methods for producing hard panned confectionaries are provided in International Patent Publication Nos. WO 2014/150438 and WO 2014/152417.

If the coating is to be colored, a colorant composition can be added to the coating solution in the later stages of the coating process. In some instances, for a hard-panned confectionery product, following the application of a number of layers of the uncolored sugar syrup to build up the sugar coating, a number of applications of a sugar syrup comprising a colorant composition are applied to provide the color coat. In certain embodiments, the color coat can require 30 or more applications of a colored coating solution to achieve the desired color. A polish coating can be applied to the outer surface of the coating.

Alternatively, the food products can include snack food products such as fruit snacks, chips/crisps, extruded snacks, tortilla/corn chips, popcorn, pretzels, nuts, granola/muesli bars, breakfast bars, energy bars, fruit bars, and other snack bars. In particular embodiments, the food product can be a chocolate-coated food product. As a further alternative, the edible ink formulation can be used on the surface of a pharmaceutical product, such as a tablet, capsule, or coated pharmaceutical product, or any other consumer product with a suitable surface for edible ink printing.

When printed onto the surface of a product, the edible ink formulation can be localized to a particular region of the surface. For example, a shape, logo, lettering, or another localized image can be printed onto the surface of the product. Alternatively, the edible ink formulation can cover the surface, either as a solid coating across the entire surface or as a pattern across the entire surface.

### 4. Methods of Printing

The presently disclosed edible ink formulations can be applied to a surface, *e.g.,* a surface of a food product, using any suitable method, as known in the art.

As embodied herein, and in certain embodiments, the edible ink formulations can be applied using a contact printing process, such as a transfer rotogravure process. In a contact printing process, the edible ink formulations can be transferred from a film or roller to the desired surface when contacted with the surface. The contact printing can be facilitated by pressure and/or heat between the surface to be treated and the film or roller.

In certain embodiments, the contact printing process can be performed manually *(e.g.,* hand printing) on individual surfaces or on multiple surfaces in a single batch. To hand print a product, an edible ink formulation is applied to an engraved (or etched) metal or ceramic plate with the desired image in such a manner as to flood the engraved area. Then, excess edible ink formulation is removed, e.g., with a doctor blade, such that edible ink remains only in the engraved portion of the plate. A rubber transfer surface is pressed against the engraved plate to transfer the edible ink image to the rubber surface, which is then pressed against the product. This process transfers the edible ink image to the product, which is then allowed to dry, resulting in a dry edible ink image on the product surface. Alternatively, the contact printing process can rely on an automatic roller-based process. For example, and not limitation, a transfer roll can be used to transfer edible ink formulation from an engraved roll to the desired product surface. Another roller, belt, or other conveyor can continuously provide untreated products with surfaces for printing to the transfer roll. In certain embodiments, the edible ink formulation can be dried, for example by heating, after application to the surface.

In the printing process, an engraved roll (also known as the "transfer roller" or the "design roll") rotates partially submerged in a tray of ink which fills the engraved areas and the roll surface. As the roll rotates out of the ink tray, a doctor blade, which is pressed against the roll surface, removes the excess ink from roll surface. The engraved roll then makes tangential contact with the rubber printing roll (also known as the "printing roller" or the "printing roll." A portion of the edible ink in the engraved area is transferred to the surface of the rubber roll. About one-half of the edible ink volume can be transferred from roll to roll and then again about one-half of the volume of the edible ink on the rubber roll can actually be transferred to the candy. The rubber roll rotates further until it makes tangential contact with candy pieces and the ink is transferred to the candy which is conveyed in pockets in an 'endless belt' of carrier bars. For purpose of example, and not limitation, the transfer rotogravure printing process and suitable printers are described in U.S. Patent Nos. 2,859,689, 4,528,904, and 5,655453.

Other suitable printing processes can be used, including but not limited to, digital printing, rotogravure, screen printing, flexo printing, offset lithography, inkjet printing, and pad printing. The scalenohedral CaCO₃ in the edible inks of the present disclosure are expected to provide good whiteness and opacity in other types of printing; however, the formulations would be different and performance in these other printer systems would need to be determined. Of course, application to inkjet printing would require adherence to particle size requirements for that technology.

In certain embodiments, the surface can be modified prior to printing in order to facilitate adhesion of the edible ink formulation to the surface. For example, the surface can be etched or otherwise modified to provide a better surface to receive the edible ink formulation. Additionally, or alternatively, the surface can be textured to provide additional adhesion between the edible ink formulation and the surface. Additionally, or alternatively, an adhesive component, such as a binder, glaze, or surfactant, can be applied to the surface prior to or after the edible ink formulation to improve the adhesion of the edible ink formulation to the surface.

As embodied herein, the edible ink formulation can be applied to the surface at a particular thickness. The thickness of the edible ink formulation can depend, for example, on the surface, the desired end use, and the desired opacity of the applied edible ink formulation. The thickness can be measured as an applied wet film thickness, referring to the thickness of a film of edible ink formulation when applied and prior to drying. For example, in certain non-limiting embodiments, the applied wet film thickness can be about 28 µm or less, about 20 µm or less, about 15 µm or less, or about 10 µm or less. The presently disclosed edible ink formulations including scalenohedral calcium carbonate particles are able to achieve desirable lightness even when applied at these small thicknesses.

### 4.1 Equipment

The drawdown and color measurement equipment and instrument details described in the present disclosure are shown below:
BYK Gardner USA (Columbia, MD)
   6 & 10 mils Double Bar Cat. No. 5302
   Byko-chart opacity 2A 5.5 x 10 inches Cat. No. 2810
Leneta Company, Inc. (Mahwah, NJ)
   Leneta Wire-Cators^{™}
   WC2.5, WC-3, WC-4, WC-6, WC-8, WC-10, WC-12, WC-16, WC-22, WC-28, WC-40, WC-52
   Leneta Vacuum Plate VP-0912
Konika Minolta Sensing Americas, Inc. (Ramsey, NJ)
   CM-5 Spectrophotometer
AMTEK BROOKFIELD (Middleboro, MA)
   Brookfield RVDV-II+ Viscometer
   Konica Minolta Inc. (Japan)
   Minolta Colorimeter

The transfer rotogravure printing process and printer details are shown below:
Ackley Machine Corporation (Moorestown, NJ)
Rotogravure Pilot Plant Printer
Production Printers

### 5. Methods of Preparation

### 5.1 Edible Ink Drawdowns for Lightness Measurement

The edible ink properties of the dried film on candy are derived from measuring films on drawdown cards. This is done to assess the inherent properties of an edible ink *(i.e.,* whiteness and opacity) on a drawdown in a very controlled and consistent manner. Thus, the drawdown procedure is a means of assessing the edible ink. One of ordinary skill in the art would expect the same properties for the same thickness layer whether on a drawdown card or a candy. Hence, the drawdown method is a valid way to assess the properties on an edible ink and avoids the complications and difficulties to making such measurements on candy. For example, if an edible ink does not transfer well or completely to a food product, it would be more complicated to assess the performance of the edible ink in terms of whiteness and opacity.

A black and white opacity card (Byko-chart opacity 2A card Cat no. 5302) is placed onto a vacuum plate (Leneta VP-0912) and held down by vacuum. The card is wiped with a lint-free wipe (Kimtech Kimwipes Ex-1 Wipes, 4.5" x 8.5") to remove dust, if present, and then 10-15 mL of a well-mixed edible ink sample is pipetted onto the center top of the card. A 6 mil drawdown bar (BYK Cat No. 2810) is placed above the edible ink and drawn in one smooth and continuous motion down the card to create a wet film of edible ink. The prepared card, with the edible ink drawdown, is stored in a stainless steel desiccator cabinet (Fisherbrand^{™} 08-645-6) containing desiccant (Drierite 10-20 mesh Stock No. 24005) and allowed to dry completely over a period of 3-5 days. The L^{∗} measurements are obtained from the dried edible ink formulation over the black portion of the card.

Alternatively, Leneta Wire-Cators^{™} can be used in place of the drawdown bar (WC2.5, WC-3, WC-4, WC-6, WC-8, WC-10, WC-12, WC-16, WC-22, WC-28, WC-40, WC-52).

### 5.2 Shellac, Alcohol/Water Edible Ink Preparation Method

Decolorized flake shellac (Stroever Schellack Bremen, SSB 56 Sonne FL Cat # 0400 0001) is dissolved in isopropanol (Sigma Aldrich W292907) with heating and stirring to produce a homogeneous solution. The solution is allowed to cool to ambient temperature and stirred with an overhead stirrer, equipped with a crossed blade impeller, while additional alcoholic solvents as described in the formulation are added. Following the solvent additions, a mixture of ammonium hydroxide (Fisher Chemical A6667-212) in water is added while stirring continued, if necessary. At this point, any additives specified in the formulation are added to the mixture portion wise. The calcium carbonate (Specialty Minerals ViCALity^{™} Light) is then added portion wise and stirring is continued for 20 minutes at 1500-2000 rpm following complete addition to produce a finished edible ink. This procedure can also be adapted for an alcohol-only based edible ink formulation based on shellac.

### 5.3 Ethyl Cellulose/Alcohol Edible Ink Preparation Method

Ethyl cellulose (ETHOCEL^{™} Standard 4 Premium (also referred to as Ethocel 4, Dow Chemical) is added portion wise to isopropanol (Sigma Aldrich W292907) at ambient temperature while stirring with an overhead stirrer, equipped with a crossed blade impeller. Stirring is for 20-30 minutes at 500-1500 rpm until a clear solution was obtained. Additional alcoholic solvents as described in the formulation are added as stirring continued. At this point any additives specified in the formulation are added and to mixture portion wise. The calcium carbonate (Specialty Minerals ViCALity^{™} Light) isadded portion wise and stirring is continued for 20 minutes at 1500-2000 rpm following complete addition to produce a finished ink.

### EXAMPLES

The presently disclosed subject matter will be better understood by reference to the following Examples, which are provided as exemplary of the disclosed subject matter, and not by way of limitation. (Those examples which are not encompassed by the claims are given for reference purpose only).

### Example 1: Effect of Scalenohedral ViCALity^{™} Light Calcium Carbonate on the Viscosity of a Water-Containing Edible Ink Formulation

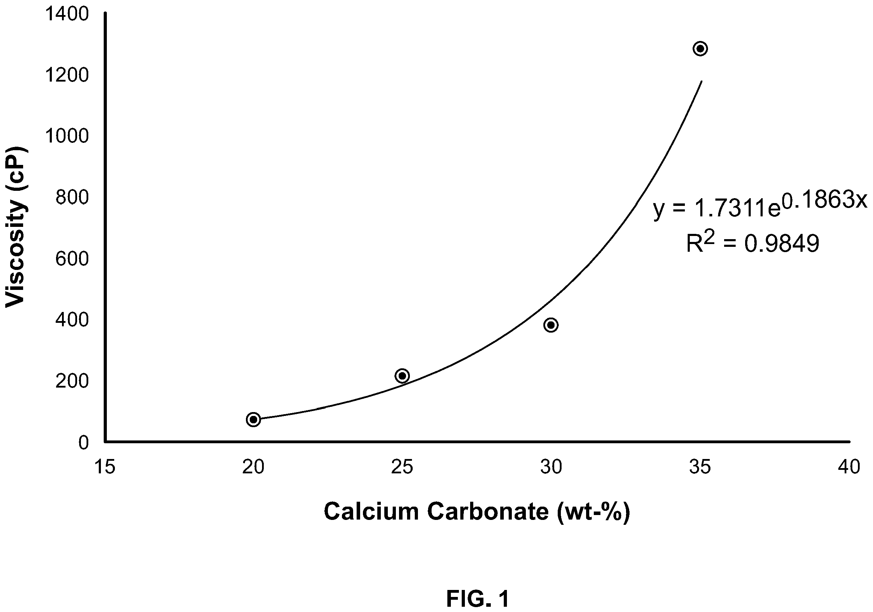

In this Example, four water-containing sample edible ink formulations were prepared and tested, each containing a different amount of scalenohedral ViCALity^{™} Light calcium carbonate ranging from 20 wt-% to 35 wt-%. The edible ink formulations were shellac-based and further included water, isopropanol, ammonium hydroxide, and propylene glycol. Upon formulating each sample, viscosity was measured using a Brookfield RVDV-II+ Viscometer equipped with a small sample adapter at an RPM of 100. The measured viscosities are provided in Table 1, and illustrated in Figure 1 as a function of the weight percent of calcium carbonate in the sample.

**Table 1.**

| **Sample** | **CaCO₃ (wt-%)** | **Viscosity (cP)** |
|---|---|---|
| 1A | 20 | 70.0 |
| 1B | 25 | 210.0 |
| 1C | 30 | 380.5 |
| 1D | 35 | 1282.0 |

The viscosity was found to vary with the amount of calcium carbonate (CaCO₃). In particular, it was found that Sample ID, the edible ink formulation with 35 wt-% calcium carbonate, was very viscous, and would not be suitable for printing with conventional contact printing equipment.

### Example 2: Effect of Particle Shape on the Viscosity and Color of a Water-Containing Edible Ink Formulation

In this Example, seven water-containing edible ink formulations were prepared, each with a different type of particle used as the pigment. The edible ink formulations were shellac-based, as described in Example 1, and the only difference between the various formulations was particle type (titanium dioxide or calcium carbonate), shape or crystal type, and size. Samples 2A-2F were formulated with calcium carbonate (CaCO₃) particles of various shapes and sizes, which are summarized in Table 2. Each sample contained 30 weight percent of calcium carbonate particles. As a control, Sample 2G was formulated with titanium dioxide (TiO₂).

**Table 2.**

| **Sample** | **Particle Type** | **Particle Shape** | **Median Particle Size (µm)** |
|---|---|---|---|
| 2A | CalEssence^{®} 70 (CaCO₃) | Prismatic | 0.7 |
| 2B | CalEssence^{®} 80 (CaCO₃) | Prismatic and Cubic | 0.8 |
| 2C | CalEssence^{®} 300 (CaCO₃) | Cubic | 3.0 |
| 2D | ViCALity^{™} Light (CaCO₃) | Scalenohedral | 1.9 |
| 2E | MULTIFEX-MM^{™} (CaCO₃) | Rosette | 0.07 |
| 2F | VICRON^{®} 15-15 (CaCO₃) | Irregular | 3.5 |
| 2G | TiO₂ | Cubic | 0.7 |

The calcium carbonate particles of this Example had a variety of shapes, including prismatic, cubic, scalenohedral, rosette, and irregular. For illustration purposes only, representative photographs are provided in Figures 2A-2F of scalenohedral (Figure 2A), cubic (Figure 2B), prismatic (Figure 2C), rosette (Figure 2D), and irregular (Figure 2E-precipitated and Figure 2F-ground) particles.

Upon formulating each sample, viscosity was measured using a Brookfield RVDV-II+ Viscometer equipped with a small sample adapter at an RPM of 100. The measured viscosities are provided in Table 3 and illustrated in
Figure 1 provides a graph comparing the amount of calcium carbonate (ranging from 20 wt-% to 30 wt-%) in an edible ink formulation and the viscosity of the edible ink formulation, as described in Example 1.

**Table 3.**

| **Sample** | **Viscositv (cP)** |
|---|---|
| 2A | 302.5 |
| 2B | 80.0 |
| 2C | 70.0 |
| 2D | 292.5 |
| 2E | 247.5 |
| 2F | 65.0 |
| 2G | 220.0 |

These data show that viscosity is also dependent on the type, shape, and size of particle used in an edible ink formulation. Several samples, particularly samples 2A, 2D, and 2E, include prismatic, scalenohedral, and rosette particles, with higher viscosities as compared to formulations having particles of another shape.

Additionally, the reflectance of the ink formulations was also measured from 360 nm to 740 nm. Each edible ink formulation was applied to a black and white card (1/2 black and 1/2 white) using a drawdown technique and allowed to dry. Reflectance was measured using a Minolta Colorimeter (Konica Minolta Inc.), and measurements were obtained from the dried edible ink formulation over the black portion of the card.

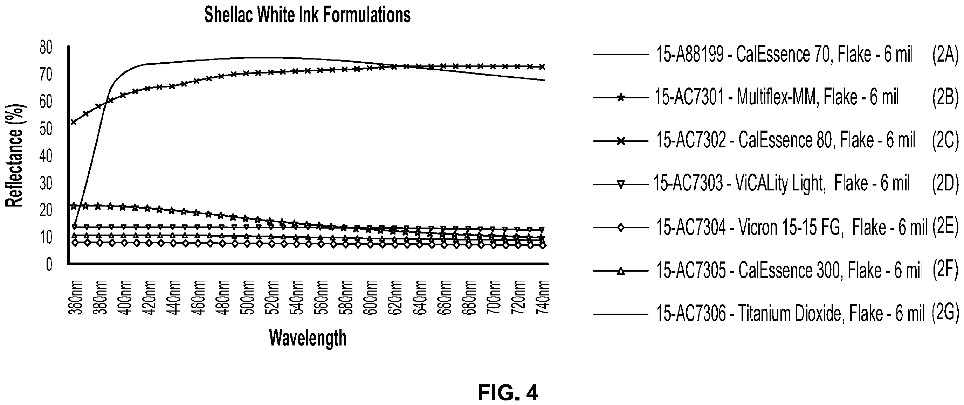

Figure 4 illustrates the reflectance of each of Samples 2A-2G across the range of 360 nm to 740 nm. As shown in Figure 4, Sample 2G (titanium dioxide) had a reflectance above 65% in a range of about 440 nm to 700 nm. Titanium dioxide pigments are known to create bright white color, and this result demonstrates this property. However, one of the calcium carbonate samples, Sample 2D, which included scalenohedral calcium carbonate particles, also achieved a reflectance above 60% in this same range, and also had a reflectance of from about 50% to about 75% in this range. As such, Sample 2D is able to create a similar white color to that of the titanium dioxide sample. Each of Samples 2A, 2B, 2C, 2E and 2F had lower reflectance and performed similarly, with those samples all having a reflectance of less than 20%.

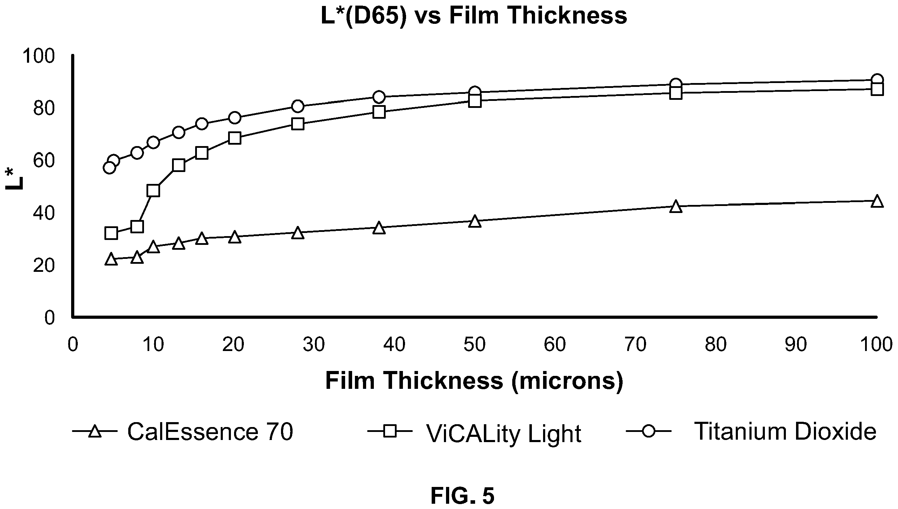

The lightness of three samples (Samples 2A, 2D, and 2G) was also measured under CIE Standard Illuminant D65 using the Minolta Colorimeter. The edible ink formulations were drawn down onto a black and white card (1/2 black and 1/2 white) and dried. Lightness (L^{∗}) was measured for the dried edible ink formulations. The L^{∗} measurements were obtained from the dried edible ink formulation over the black portion of the card. Then, L^{∗} was plotted as a function of wet film thickness, as shown in Figure 5. Table 4, below, provides the L^{∗} values at various wet film thicknesses for each of Samples 2A, 2D, and 2G.

**Table 4.**

| **Wet film thickness (µm)** | **Lightness (L* Values)** | | |
|---|---|---|---|
| | **Sample 2A** | **Sample 2D** | **Sample 2G** |
| 100 | 44.57 | 86.89 | 90.33 |
| 75 | 42.15 | 85.09 | 88.64 |
| 50 | 37.05 | 82.29 | 85.53 |
| 38 | 33.89 | 78.05 | 83.47 |
| 28 | 32.18 | 73.55 | 79.85 |
| 20 | 30.89 | 68.03 | 75.81 |
| 16 | 29.96 | 62.1 | 73.45 |
| 13 | 27.79 | 57.53 | 69.84 |
| 10 | 26.83 | 47.64 | 66.49 |
| 8 | 22.93 | 33.9 | 62.84 |
| 5 | 22.43 | 32.12 | 59.42 |
| 4.5 | 21.88 | 31.58 | 56.83 |

Figure 5, based on the data in Table 4 above, illustrates lightness of the dried film as a function of applied wet film thickness (from 4.5 µm to 100 µm), where the maximum possible value for L^{∗} is 100. As illustrated in Figure 5, Sample 2D, which included scalenohedral calcium carbonate particles, was nearly as light as the titanium dioxide control (Sample 2G), and both achieved an L^{∗} value of about 90, at a wet film thickness of 100 µm. However, even at wet film thicknesses as low as 10 µm, Sample 2D including scalenohedral calcium carbonate particles achieved an L^{∗} value of at least about 40. Thus, the ink property ranges for an edible ink as a dried film on the candy are determined, wherein the whiteness and opacity obtained on a candy is a function of the thickness of the ink layer.

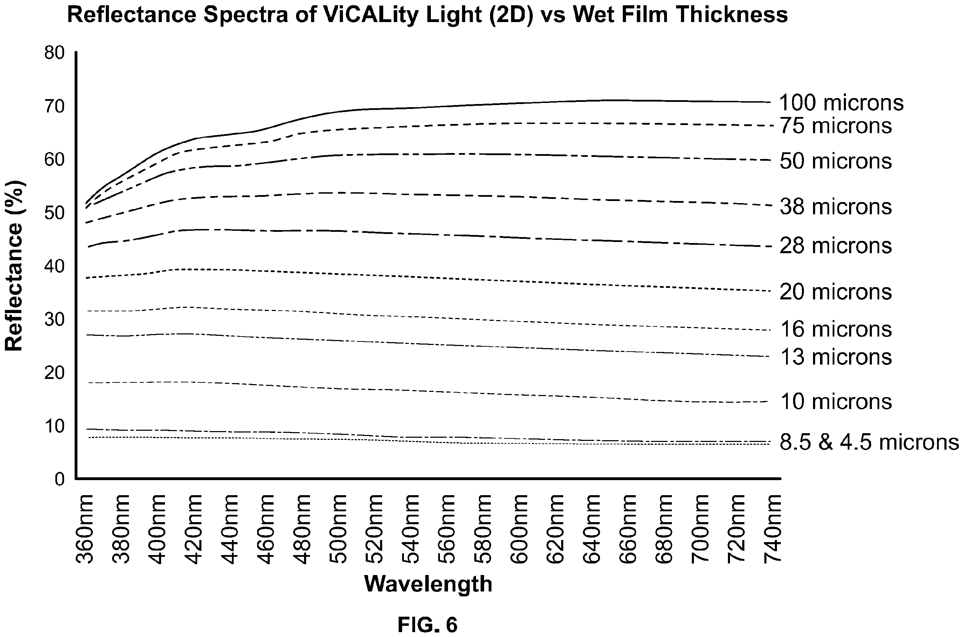

Figure 6 illustrates the reflectance of Sample 2D across the range of 360 nm to 740 nm. As shown in Figure 6, Sample 2D, which included scalenohedral calcium carbonate particles (ViCALity^{™} Light) showed an increase in reflectance with an increase in wet film thickness in a range of about 440 nm to about 700 nm.

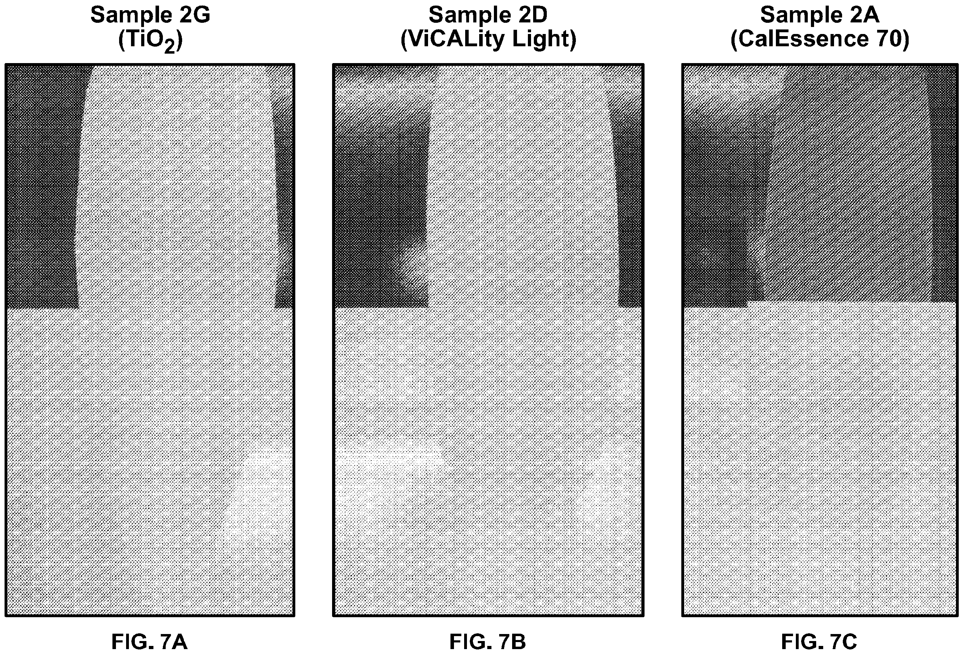

Figures 7A-7C provide photographs of films of Samples 2G, 2D, and 2A, respectively, prepared using a drawdown technique on a dark surface. The wet film thickness for each of these samples was 6 mils (about 152.4 µm). As shown in Figures 7A and 7B, Samples 2G and 2D, corresponding to the titanium dioxide particles and the scalenohedral calcium carbonate particles, both provided good white contrast against the dark background, particularly when compared to Sample 2A containing prismatic calcium carbonate particles (Figure 7C).

This Example demonstrates that an edible ink formulation with scalenohedral calcium carbonate particles can have a color profile that can achieve whiteness similar to that of titanium dioxide ink formulations. As compared to edible ink formulations with calcium carbonate particles of other shapes, the scalenohedral calcium carbonate particles had a surprisingly particular white color. As noted above, the only difference between the edible ink formulations using the various particle types was shape and size, and as such, the scalenohedral nature of the calcium carbonate particles contributed significantly to the color profile. Size, in particular, was not found to be determinative of the color profile. Additionally, viscosity was not found to be determinative of the color profile, as several samples had similar viscosities but only the edible ink formulation with scalenohedral calcium carbonate particles achieved a color profile similar to that of the titanium dioxide edible ink formulation. Moreover, edible ink formulations including scalenohedral calcium carbonate particles were above to achieve an improved lightness *(e.g.,* an L^{∗} value of greater than 40) even at relatively small wet film thicknesses of 10 µm.

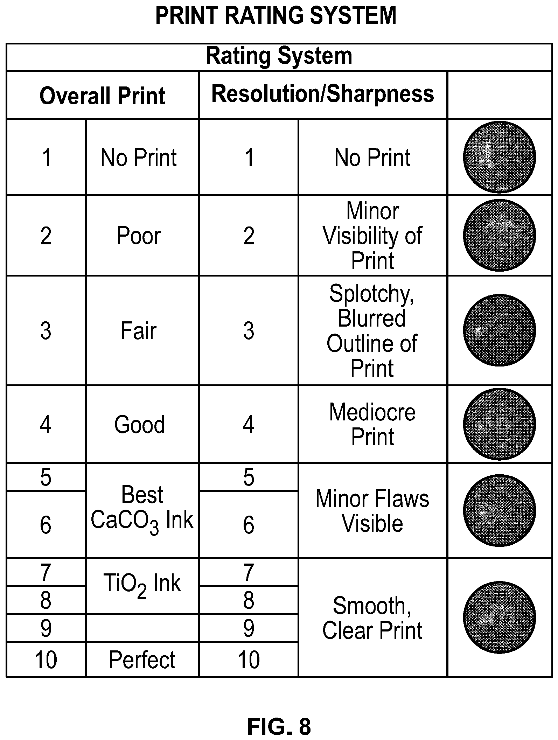

To further test the suitability of a scalenohedral calcium carbonate edible ink formulation, the same water-containing edible ink formulations (Samples 2A, 2D, and 2G) were hand printed onto hard-panned candies having various base colors. The print rating system used to evaluate the quality, *i.e.,* the resolution or sharpness, of the images produced by these edible inks on the candy is shown in Figure 8.

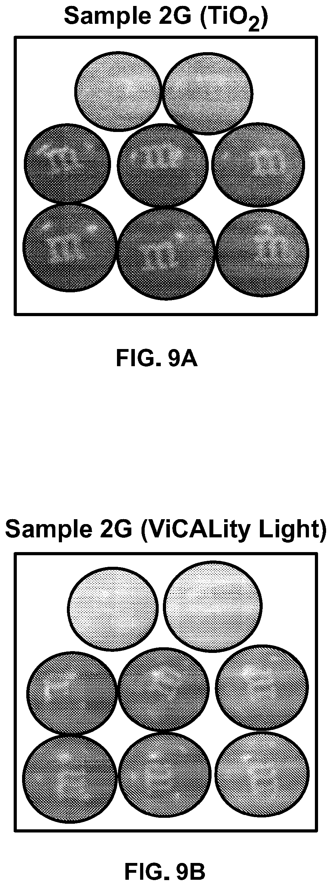

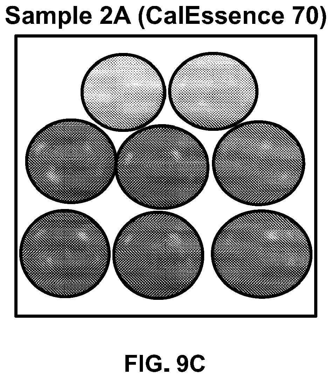

Figures 9A-9C shows photographs of these hard-panned candies, which have been printed with white edible ink formulations. Figure 9A is a photograph of candies printed with Sample 2G, Figure 9B is a photograph of candies printed with Sample 2D, and Figure 9C is a photograph of candies printed with Sample 2A. In each of Figures 9A, 9B, and 9C, the top row comprises two yellow candies, the middle row comprises a red, blue and green candy (from left to right), and the bottom row comprises a red, blue and green candy (from left to right).

Figure 9A shows the titanium dioxide formulation of Sample 2G, which provides a visible white print with good contrast against the underlying colors. Figure 9A is assessed a rating of between 7-8 (TiO₂ Ink), based on the print rating system of Figure 8. Figure 9B shows the scalenohedral calcium carbonate formulation of Sample 2D, in accordance with the disclosed subject matter, with a shellac-based composition, and provides a visible white print, and has good contrast against the underlying colors. Figure 9B is assessed a rating of 2 (poor) for the top row yellow candies and a rating of 4 (good) for the red, blue, and green candies in the middle and bottom rows As such, this formulation could be a suitable substitute for a formulation with a titanium dioxide pigment. For comparison, Figure 9C shows the non-scalenohedral calcium carbonate formulation of Sample 2A, which is barely visible against the underlying colors. Figure 9C is assessed a rating of between 1 (no print) to 2 (poor) for all of the candies.

### Example 3: Comparison of Edible Ink Formulations with and without Water

The present Example provides representative edible ink formulations that are water-containing and non-water-containing, along with corresponding print ratings. While the water-containing edible ink formulations of Examples 1 and 2 (Shellac/Alcohol/Water) were able to be hand printed, they did not work well on an actual printer, *i.e.,* the ink did not transfer through the printer rolls and onto the product. So, despite the fact the water-containing edible ink was very white, it did not give a good image on the product when machine-printed.

In Examples 3 and 4, the water-containing edible ink formulations were compared to the alcohol-based (no water) edible ink formulations. Thus, as shown in the following results, the alcohol-based (no water) formulations have been shown to have good whiteness and opacity and also have been shown to work well in machine printing.

Table 5 and Figures 11A-11D show four comparative water-containing, white edible ink formulations (# 1 to # 4) containing shellac, alcohol, and water, which gave print ratings of 2 (poor) or 3 (fair). Figures 11A-11D show photographs of the hard-panned candies, which have been pilot-printed using water-containing, white edible ink formulations.

**Table 5.**

| | Shellac/Alcohol/ Water #1 (wt-%) | Shellac/Alcohol/ Water #2 (wt-%) | Shellac/Alcohol/ Water #3 (wt-%) | Shellac/Alcohol/ Water #4 (wt-%) |
|---|---|---|---|---|
| Isopropanol | 20 | 17.5 | 36 | 18.67 |
| Propylene Glycol | 16 | 14 | 12.8 | 14.93 |
| Water | 20 | 30 | 16 | 18.67 |
| Ammonium Hydroxide | 3 | 2.63 | 2.4 | 2.8 |
| ViCALity^{™} Light CaCO₃ | 25 | 21.88 | 20 | 30 |
| Flake Shellac | 16 | 14 | 12.8 | 14.93 |
| | | | | |
| L^{∗} (6 mil drawdown) | 81.82 | 78.47 | 75.14 | 87.45 |
| % printed (ceramic roll) | 66% | 45% | 46% | 79% |
| Overall print rating | 3 | 2 | 2 | 3 |

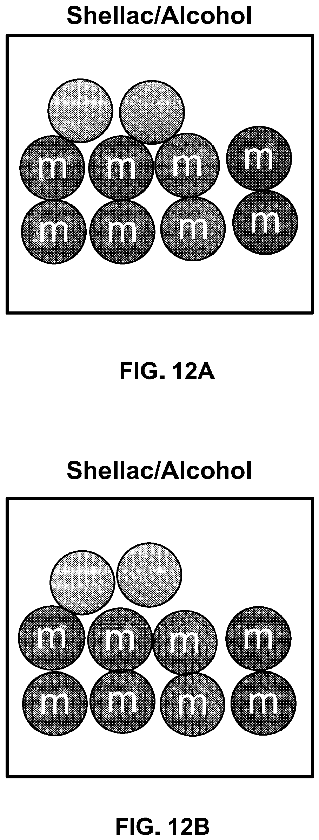

Table 6 and Figures 12A and 12B show two exemplary non-water-containing, alcohol-based white edible ink formulations (# 1 and # 2) containing shellac and alcohol, which gave print ratings of 6 (best CaCO₃ ink) and 4 (good), respectively. As depicted in Figures 12A and 12B, the hard-panned candies that have been pilot-printed using non-water-containing, alcohol-based, white edible ink formulations show improved print ratings compared to the water-containing formulations.

**Table 6.**

| | Shellac/Alcohol #1 (wt-%) | Shellac/Alcohol #2 (wt-%) |
|---|---|---|
| Isopropanol | 40 | 20 |
| Isoamyl Alcohol | 20 | 40 |
| ViCALity^{™} Light CaCO₃ | 30 | 30 |
| Flake Shellac | 10 | 10 |
| | | |
| L^{∗} (6 mil drawdown) | 89.89 | 90.03 |
| % printed (ceramic roll) | 100% | 94% |
| Overall print rating | 6 | 4 |

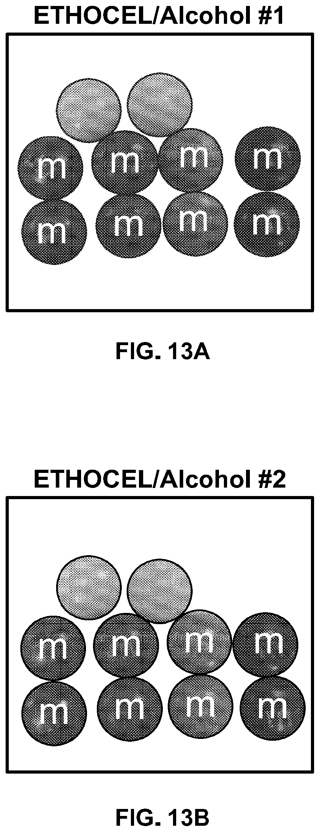

Table 7 and Figures13A and 13B show two exemplary non-water-containing, alcohol-based, white edible ink formulations (# 1 and # 2) containing ETHOCEL^{™} and alcohol, which both gave print ratings of 5 (best CaCO₃ ink).

**Table 7.**

| | ETHOCEL^{™}/Alcohol #1 (wt-%) | ETHOCEL^{™}/Alcohol #2 (wt-%) |
|---|---|---|
| Isopropanol | 45 | 40 |
| Isoamyl Alcohol | 20 | 20 |
| ViCALity^{™} Light CaCO₃ | 30 | 30 |
| ETHOCEL^{™} Std 4 Premium | 5 | 10 |
| | | |
| L^{∗} (6 mil drawdown) | 91.65 | 91.32 |
| % printed (ceramic roll) | 99% | 100% |
| Overall print rating | 5 | 5 |

| | | |
|---|---|---|
| ETHOCEL^{™} is ETHOCEL^{™} Standard 4 Premium from Dow Chemical. | | |

### Example 4: Comparison of ViCALity^{™} Light Calcium Carbonate Edible Ink Formulations with and without Water

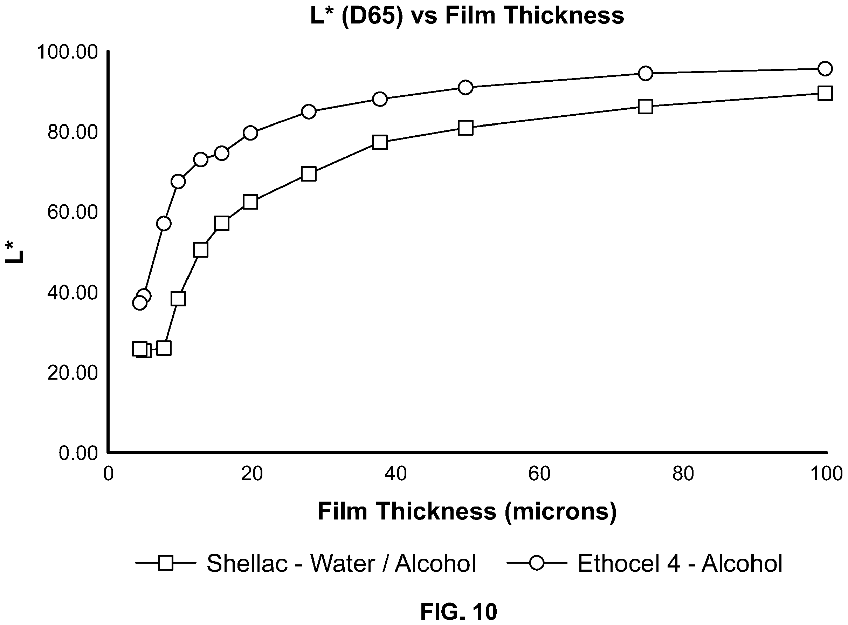

In this Example, two sample edible ink formulations were tested, each containing 30 wt-% of ViCALity^{™} Light calcium carbonate. Comparative edible ink formulation 4A, shown in Table 8 below, was shellac-based and further included water, alcohol (isopropanol), propylene glycol, ammonium hydroxide. Inventive example 4B was ethyl cellulose-based (ETHOCEL^{™} std. 4) and further included alcohol (isopropanol and isoamyl alcohol) and no water. The lightness of the two samples (Samples 4A and 4B) was measured under CIE Standard Illuminant D65 using the Minolta Colorimeter. The edible ink formulations were drawn down onto a black and white card (1/2 black and 1/2 white) and dried. Lightness (L^{∗}) was measured for the dried edible ink formulations. The L^{∗} measurements were obtained from the dried edible ink formulation over the black portion of the card. Then, L^{∗} was plotted as a function of wet film thickness, as shown in Figure 10. Table 8, below, provides the L^{∗} values at various wet film thicknesses for each of Samples 4A and 4B. As illustrated in Figure 10, Sample 4B, which included scalenohedral calcium carbonate particles, Ethocel 4, alcohol, and no water unexpectedly showed improved L^{∗} values compared to Sample 4A, which included scalenohedral calcium carbonate particles, shellac, alcohol, and water.

**Table 8.**

| **Wet film thickness (µm)** | **Lightness (L^{∗} Values)** | |
|---|---|---|
| | **Sample 4A** | **Sample 4B** |
| 100 | 89.13 | 95.56 |
| 75 | 85.75 | 94.06 |
| 50 | 80.56 | 90.62 |
| 38 | 77.04 | 87.96 |
| 28 | 68.99 | 84.62 |
| 20 | 62.69 | 78.95 |
| 16 | 56.53 | 74.33 |
| 13 | 50.26 | 72.57 |
| 10 | 38.01 | 67.45 |
| 8 | 25.73 | 56.51 |
| 5 | 25.19 | 39.09 |
| 4.5 | 25.86 | 36.92 |

## Claims

1. An edible ink formulation, comprising scalenohedral calcium carbonate particles, a solvent and a binder,
wherein the solvent is one or more C2 to C6 alcohols, selected from the group consisting of isopropanol, 1-propanol, ethanol, 1-butanol, 3-methyl-1-butanol, 2-butanol, hexanol and combinations thereof, and wherein the calcium carbonate particles are present in amount of from about 15 wt-% to about 35-wt%
wherein the edible ink formulation, when prepared as a dry film, exhibits a reflectance of from about 30% to about 75% in a range of from about 440 nm to about 700 nm as measured as the dried film created from a wet film of thickness equal to 6 mil (152.4 µm) and a lightness L^{∗} value of at least about 40 as measured as the dried film created from wet films at a thickness of about 13 µm under CIE Standard Illuminant D65 when prepared as a dry film.

2. The edible ink formulation of claim 1, wherein the edible ink formulation has an applied wet film thickness of about 10 µm or less.

3. The edible ink formulation of claim 1, wherein the calcium carbonate particles are present in an amount of from about 20 wt-% to about 30 wt-%.

4. The edible ink formulation of claim 1, wherein the calcium carbonate particles have a particle size of from about 0.5 µm to about 5 µm, optionally from about 1.5 µm to about 3 µm.

5. The edible ink formulation of claim 1, wherein the binder is selected from the group consisting of shellac, Zein, polyvinylpyrrolidone, and alcohol-soluble cellulose-based polymers, optionally wherein the cellulose based polymer is hydroxypropylcellulose (HPC) or ethylcellulose.

6. The edible ink formulation of claim 1, wherein the solvent is present in a range from about 40 wt.% to about 65 wt.%.

7. The edible ink formulation of claim 1, wherein the solvent is a non-water containing solvent consisting of isopropanol and isoamyl alcohol.

8. A food product having the edible ink formulation of claim 1 applied to a surface thereof and in the form of a wet film or a dry film.

9. The food product of claim 8, wherein the food product is a confectionery product, for example, a hard-panned candy, and optionally wherein the hard-panned candy comprises a polish coating.

10. The food product of claim 8, wherein the food product is a snack food product.

11. A method of printing an edible ink formulation onto a food product, the method comprising:
providing a surface of a food product;
contacting an edible ink formulation comprising scalenohedral calcium carbonate particles with the surface of the food product;
transferring the edible ink formulation to the surface of the food product; and
drying the edible ink formulation, wherein the dried edible ink formulation exhibits a reflectance of from about 30% to about 75% in a range of from about 440 nm to about 700 nm as measured as the dried film created from a wet film of thickness equal to 6 mil (152.4 µm) and a lightness L^{∗} value of at least about 40 as measured as the dried film created from wet films at a thickness of about 10 µm under CIE Standard Illuminant D65., wherein the edible ink formulation comprising scalenohedral calcium carbonate particles further comprises a solvent and a binder, wherein the solvent is one or more C2 to C6 alcohols, selected from the group consisting of isopropanol, 1-propanol, ethanol, 1-butanol, 3-methyl-1-butanol, 2-butanol, hexanol and combinations thereof, and wherein the calcium carbonate particles are present in amount of from about 15 wt-% to about 35-wt%

12. The method of claim 11, further comprising treating the surface of the food product prior to contacting the surface with the edible ink formulation.

13. The method of claim 11, wherein the food product is a confectionery product.

14. The method of claim 13, wherein the confectionery product is a hard-panned candy, optionally wherein the hard-panned candy comprises a polish coating.

15. The method of claim 11, wherein the food product is a snack food product.

## Patentansprüche

1. Essbare Tintenformulierung, umfassend skalenoedrische Calciumcarbonatpartikel, ein Lösungsmittel und ein Bindemittel,
wobei das Lösungsmittel ein oder mehrere C2- bis C6-Alkohole ausgewählt aus der Gruppe bestehend aus Isopropanol, 1-Propanol, Ethanol, 1-Butanol, 3-Methyl-1-butanol, 2-Butanol, Hexanol und Kombinationen davon ist und wobei die Calciumcarbonatpartikel in einer Menge von etwa 15 Gew.-% bis etwa 35 Gew.-% vorhanden sind,
wobei die essbare Tintenformulierung, wenn als ein trockener Film hergestellt, ein Reflexionsvermögen von etwa 30 % bis etwa 75 % in einem Bereich von etwa 440 nm bis etwa 700 nm, wie gemessen an dem getrockneten Film, der aus einem feuchten Film mit einer Dicke von gleich 6 mil (152,4 µm) erzeugt ist, und einen Helligkeits-L*-Wert von wenigstens etwa 40, wie gemessen an dem getrockneten Film, der aus feuchten Filmen mit einer Dicke von etwa 13 µm erzeugt ist, unter CIE-Normlicht D65 aufweist, wenn als ein trockener Film hergestellt.

2. Essbare Tintenformulierung gemäß Anspruch 1, wobei die essbare Tintenformulierung eine Dicke des aufgetragenen feuchten Films von etwa 10 µm oder weniger aufweist.

3. Essbare Tintenformulierung gemäß Anspruch 1, wobei die Calciumcarbonatpartikel in einer Menge von etwa 20 Gew.-% bis etwa 30 Gew.-% vorhanden sind.

4. Essbare Tintenformulierung gemäß Anspruch 1, wobei die Calciumcarbonatpartikel eine Partikelgröße von etwa 0,5 µm bis etwa 5 µm, gegebenenfalls von etwa 1,5 µm bis etwa 3 µm, aufweisen.

5. Essbare Tintenformulierung gemäß Anspruch 1, wobei das Bindemittel ausgewählt ist aus der Gruppe bestehend aus Schellack, Zein, Polyvinylpyrrolidon und alkohollöslichen Polymeren auf Cellulosebasis, wobei das Polymer auf Cellulosebasis gegebenenfalls Hydroxypropylcellulose (HPC) oder Ethylcellulose ist.

6. Essbare Tintenformulierung gemäß Anspruch 1, wobei das Lösungsmittel in einem Bereich von etwa 40 Gew.-% bis etwa 65 Gew.-% vorhanden ist.

7. Essbare Tintenformulierung gemäß Anspruch 1, wobei das Lösungsmittel ein nicht wasserhaltiges Lösungsmittel ist, das aus Isopropanol und Isoamylalkohol besteht.

8. Lebensmittelprodukt, das die essbare Tintenformulierung gemäß Anspruch 1 auf eine Oberfläche davon aufgebracht und in der Form eines feuchten Films oder eines trockenen Films aufweist.

9. Lebensmittelprodukt gemäß Anspruch 8, wobei das Lebensmittelprodukt ein Süßwarenprodukt ist, beispielsweise ein hartdragiertes Bonbon, und wobei das hartdragierte Bonbon gegebenenfalls eine Glanzbeschichtung umfasst.

10. Lebensmittelprodukt gemäß Anspruch 8, wobei das Lebensmittelprodukt ein Snack-Lebensmittelprodukt ist.

11. Verfahren zum Drucken einer essbaren Tintenformulierung auf ein Lebensmittelprodukt, wobei das Verfahren umfasst:
Bereitstellen einer Oberfläche eines Lebensmittelprodukts;
Inkontaktbringen einer essbaren Tintenformulierung, die skalenoedrische Calciumcarbonatpartikel umfasst, mit der Oberfläche des Lebensmittelprodukts;
Überführen der essbaren Tintenformulierung auf die Oberfläche des Lebensmittelprodukts; und
Trocknen der essbaren Tintenformulierung, wobei die getrocknete essbare Tintenformulierung ein Reflexionsvermögen von etwa 30 % bis etwa 75 % in einem Bereich von etwa 440 nm bis etwa 700 nm, wie gemessen an dem getrockneten Film, der aus einem feuchten Film mit einer Dicke von gleich 6 mil (152,4 µm) erzeugt ist, und einen Helligkeits-L*-Wert von wenigstens etwa 40, wie gemessen an dem getrockneten Film, der aus feuchten Filmen mit einer Dicke von etwa 10 µm erzeugt ist, unter CIE-Normlicht D65 aufweist, wobei die essbare Tintenformulierung, die skalenoedrische Calciumcarbonatpartikel umfasst, ferner ein Lösungsmittel und ein Bindemittel umfasst, wobei das Lösungsmittel ein oder mehrere C2- bis C6-Alkohole ausgewählt aus der Gruppe bestehend aus Isopropanol, 1-Propanol, Ethanol, 1-Butanol, 3-Methyl-1-butanol, 2-Butanol, Hexanol und Kombinationen davon ist und wobei die Calciumcarbonatpartikel in einer Menge von etwa 15 Gew.-% bis etwa 35 Gew.-% vorhanden sind.

12. Verfahren gemäß Anspruch 11, ferner umfassend Behandeln der Oberfläche des Lebensmittelprodukts vor dem Inkontaktbringen mit der essbaren Tintenformulierung.

13. Verfahren gemäß Anspruch 11, wobei das Lebensmittelprodukt ein Süßwarenprodukt ist.

14. Verfahren gemäß Anspruch 13, wobei das Süßwarenprodukt ein hartdragiertes Bonbon ist, wobei das hartdragierte Bonbon gegebenenfalls eine Glanzbeschichtung umfasst.

15. Verfahren gemäß Anspruch 11, wobei das Lebensmittelprodukt ein Snack-Lebensmittelprodukt ist.

## Revendications

1. Formulation d'encre comestible, comprenant des particules de carbonate de calcium scalénoédriques, un solvant et un liant,
le solvant étant un ou plusieurs alcools en C2 à C6, choisis dans le groupe constitué par l'isopropanol, le 1-propanol, l'éthanol, le 1-butanol, le 3-méthyl-1-butànol, le 2-butanol, l'hexanol et des combinaisons correspondantes, et les particules de carbonate de calcium étant présentes en une quantité allant d'environ 15 % en poids à environ 35 % en poids,
la formulation d'encre comestible, lorsqu'elle est préparée comme un film sec, présentant une réflectance allant d'environ 30 % à environ 75 % dans une plage allant d'environ 440 nm à environ 700 nm telle que mesurée comme le film séché créé à partir d'un film humide d'une épaisseur égale à 6 mil (152,4 µm) et une valeur de luminosité L* d'au moins environ 40 telle que mesurée comme le film séché créé à partir de films humides à une épaisseur d'environ 13 µm selon l'Illuminant Normalisé D65 de la CIE lorsqu'il est préparé comme un film sec.

2. Formulation d'encre comestible selon la revendication 1, la formulation d'encre comestible ayant une épaisseur de film humide appliqué d'environ 10 µm ou moins.

3. Formulation d'encre comestible selon la revendication 1, les particules de carbonate de calcium étant présentes en une quantité allant d'environ 20 % en poids à 30 % en poids.

4. Formulation d'encre comestible selon la revendication 1, les particules de carbonate de calcium ayant une taille de particule allant d'environ 0,5 µm à environ 5 µm, éventuellement d'environ 1,5 µm à environ 3 µm.

5. Formulation d'encre comestible selon la revendication 1, le liant étant choisi dans le groupe constitué par une gomme-laque, une Zéine, une polyvinylpyrrolidone, et des polymères à base de cellulose solubles dans un alcool, éventuellement le polymère à base de cellulose étant une hydroxypropylcellulose (HPC) ou une éthylcellulose.

6. Formulation d'encre comestible selon la revendication 1, le solvant étant présent dans une plage allant d'environ 40 % en poids à 65 % en poids.

7. Formulation d'encre comestible selon la revendication 1, le solvant étant un solvant ne contenant pas d'eau constitué d'isopropanol et d'alcool isoamylique.

8. Produit alimentaire ayant la formulation d'encre comestible selon la revendication 1 appliquée sur une surface de celui-ci et sous la forme d'un film humide ou d'un film sec.

9. Produit alimentaire selon la revendication 8, le produit alimentaire étant un produit de confiserie, par exemple, un bonbon dur, et éventuellement le bonbon dur comprenant un revêtement de polissage.

10. Produit alimentaire selon la revendication 8, le produit alimentaire étant un produit alimentaire pour collation.

11. Procédé d'impression d'une formulation d'encre comestible sur un produit alimentaire, le procédé comprenant :
la mise à disposition d'une surface d'un produit alimentaire ;
la mise en contact d'une formulation d'encre comestible comprenant des particules de carbonate de calcium scalénoédriques avec la surface du produit alimentaire ;
le transfert de la formulation d'encre comestible à la surface du produit alimentaire ; et
le séchage de la formulation d'encre comestible, la formulation d'encre comestible séchée présentant une réflectance allant d'environ 30 % à environ 75 % dans une plage allant d'environ 440 nm à environ 700 nm telle que mesurée comme le film séché créé à partir d'un film humide d'une épaisseur égale à 6 mil (152,4 µm) et une valeur de luminosité **L*** d'au moins environ 40 telle que mesurée comme le film séché créé à partir de films humides à une épaisseur d'environ 10 µm selon l'Illuminant Normalisé D65 de la CIE, la formulation d'encre comestible comprenant des particules de carbonate de calcium scalénoédriques comprenant en outre un solvant et un liant, le solvant étant un ou plusieurs alcools en C2 à C6, choisis dans le groupe constitué par l'isopropanol, le 1-propanol, l'éthanol, le 1-butanol, le 3-méthyl-1-butanol, le 2-butanol, l'hexanol et des combinaisons correspondantes, et les particules de carbonate de calcium étant présentes en une quantité allant d'environ 15 % en poids à environ 35 % en poids.

12. Procédé selon la revendication 11, comprenant en outre le traitement de la surface du produit alimentaire avant la mise en contact de la surface avec la formulation d'encre comestible.

13. Procédé selon la revendication 11, le produit alimentaire étant un produit de confiserie.

14. Procédé selon la revendication 13, le produit de confiserie étant un bonbon dur, éventuellement le bonbon dur comprenant un revêtement de polissage.

15. Procédé selon la revendication 11, le produit alimentaire étant un produit alimentaire pour collation.
